# EUROPEAN PATENT APPLICATION

(11) **EP 1 288 778 A2**
(43) Date of publication of application: **05.03.2003**
(21) Application number: 02251447.5
(22) Date of filing: 01.03.2002
(51) Int. Cl.: G06F 9/445, G06F 9/44

(54) **Internet appliance terminal unit environment information managing method and program**

(30) Priority: 31.08.2001 JP 2001263709
(71) Applicant: FUJITSU LIMITED, Kawasaki-shi, Kanagawa 211-8588 (JP)
(72) Inventor: Nakamura, Toshihisa, Nakahara-ku, Kawasaki-shi, Kanagawa 211 (JP); Oki, Hirsohi, Nakahara-ku, Kawasaki-shi, Kanagawa 211 (JP); Tanikawa, Seijun, Nakahara-ku, Kawasaki-shi, Kanagawa 211 (JP); Munakata, Akio, Nakahara-ku, Kawasaki-shi, Kanagawa 211 (JP)
(74) Representative: Mohun, Stephen John

(57) **Abstract**

An environment information storing means for storing environment information of an operating system or an application program executed by the Internet appliance terminal unit (3), an environment change information acquiring means for acquiring environment change information containing a changed portion of the environment information from the application service server (4), and an environment change information analyzing means for analyzing the environment change information acquired by the environment change information acquiring means corresponding to environment information stored in the environment information storing means are provided. Thus, a network server apparatus (1), an Internet appliance terminal unit environment information managing method, and an Internet appliance terminal unit environment information managing program for managing environment information of an Internet appliance terminal unit (3), in particular, to those that allow an application service server (4) to provide a responsive service for an Internet appliance terminal unit (3) are provided.

## Description

The present invention relates to a network server apparatus, an Internet appliance terminal unit environment information managing method, and an Internet appliance terminal unit environment information managing program for managing environment information of an Internet appliance terminal unit, in particular, to those that allow an application service server to provide a responsive service for an Internet appliance terminal unit.

In recent years, the Internet is becoming common. Each company publishes its home page on the network so as to provide an Internet service for users. In addition, many users want to receive a service from a company using an Internet connecting unit.

However, currently, the needs on both sides have not well functioned.

In other words, the company one-sidedly publishes its home page and provides its service for users who access the home page. On the other hand, users access the home page of the company using known Internet connecting units and receive a service therefrom. Thus, there is a problem of which the company cannot provide a responsive service for users.

The present invention is made from the above-described point of view. Embodiments of the present invention aim to provide a network server apparatus, an Internet appliance terminal unit environment information managing method, an Internet appliance terminal unit environment information managing program for correlatively managing an environment of an Internet appliance terminal unit that meets a service that an application service server provides and the Internet appliance terminal unit so that the application service server can provide a responsive service for the Internet appliance terminal unit.

A network server apparatus according to the present invention comprises an environment information storing unit, an environment change information acquiring unit, and an environment change information analyzing unit.

In an embodiment of the present invention, the environment information storing unit stores environment information of an operating system or an application program executed by the Internet appliance terminal unit. The environment change information acquiring unit acquires environment change information containing a changed portion of the environment information from the application service server. The environment change information analyzing unit analyzes the environment change information acquired by the environment change information acquiring unit corresponding to environment information stored in the environment information storing unit.

The Internet appliance terminal unit may comprise an environment change information receiving unit and a build memory.

In another embodiment of the present invention, the environment change information receiving unit receives the environment change information from the Network server apparatus as set forth in the above embodiment of the present invention. The build memory has a multi user build memory portion and a single user build memory portion, the multi user build memory portion storing a service in common with a plurality of users who use the Internet appliance terminal unit, the single user build memory portion storing a service for each user who uses the Internet appliance terminal unit. The Internet appliance terminal unit reflects the environment change information received by the environment change information receiving unit to the build memory.

To satisfy the needs of both sides (namely, a company and users), a dedicated Network server unit (IA (Internet Appliance) server) is disposed on a network such as the Internet. The IA server stores required user information, environment information, and environment change information as a database (version management database (DB: Data Base)). When necessary, an ASP (Application Service Provider) can version up a system and an application of an Internet client terminal unit (Internet appliance terminal unit (IA client) to a desired client environment.

To solve the above-described problem, the present invention has the following structure.

A first aspect of the present invention is a network server apparatus connected to an Internet appliance terminal unit and an application service server through a network, comprising an environment information storing unit for storing environment information of an operating system or an application program executed by the Internet appliance terminal unit, an environment change information acquiring unit for acquiring environment change information containing a changed portion of the environment information from the application service server, and an environment change information analyzing unit for analyzing the environment change information acquired by the environment change information acquiring unit corresponding to environment information stored in the environment information storing unit.

Thus, a user can always receive a desired service in the latest client environment from an ASP.

In addition, it is preferred that the Network server apparatus according to the present invention further comprises an environment change information reflecting unit for transmitting the environment change information to the Internet appliance terminal unit so as to reflect environment change information analyzed by the environment change information analyzing unit to the Internet appliance terminal unit.

In the Network server apparatus according to the present invention, it is preferred that the environment information storing unit has a build table that has a multi user build area and a single user build area, the multi user build area storing a service in common with a plurality of users who use the Internet appliance terminal unit, the single user build area storing a service for each user who uses the Internet appliance terminal unit.

In the Network server apparatus according to the present invention, it is preferred that the environment change information is version up information of the environment information.

A second aspect of the present invention is an Internet appliance terminal unit connected to a network server apparatus as set forth in the first aspect and an application service server through a network, comprising an environment change information receiving unit for receiving the environment change information from the Network server apparatus, and a build memory having a multi user build memory portion and a single user build memory portion, the multi user build memory portion storing a service in common with a plurality of users who use the Internet appliance terminal unit, the single user build memory portion storing a service for each user who uses the Internet appliance terminal unit, wherein the environment change information received by the environment change information receiving unit is reflected to the build memory.

Preferred embodiments of the invention will now be described by way of example only, with reference to the accompanying drawings, in which:
Fig. 1 is a schematic diagram showing the overall structure of a system including an IA server (Network server unit) and an IA client (Internet appliance terminal unit) according to the present invention;
Fig. 2 is a schematic diagram showing a data structure of a machine table;
Fig. 3 is a schematic diagram showing a data structure of an ASP table;
Fig. 4 is a schematic diagram showing a data structure of an affinity table;
Fig. 5 is a schematic diagram showing a data structure of a multi user build area for storing a service in common with a plurality of users who use the IA client;
Fig. 6 is a schematic diagram showing a data structure of a single user build area for storing a service for each user who uses the IA client;
Fig. 7 is a flow chart showing an overall version up process according to the present invention;
Fig. 8 is a flow chart showing a DB registering/ updating process of the IA server;
Fig. 9 is a flow chart showing a client connecting process of the IA server;
Fig. 10 is a flow chart showing a DB updating process of an ASP;
Fig. 11 is a flow chart showing a version up process of an IA client;
Fig. 12 is a schematic diagram showing a version up sequence of IA-SENDENV;
Fig. 13 is a schematic diagram showing an example of the case that an environment of other than a contracted IA client (an IA client with a different MID) is used;
Fig. 14 is a schematic diagram showing an example of the case that any trouble takes place in an IA client;
Fig. 15 is a schematic diagram showing the structures of an Internet appliance terminal unit and an Internet appliance terminal unit user managing unit; and
Fig. 16 is a schematic diagram for explaining a loading operation of a program to a computer according to the present invention.

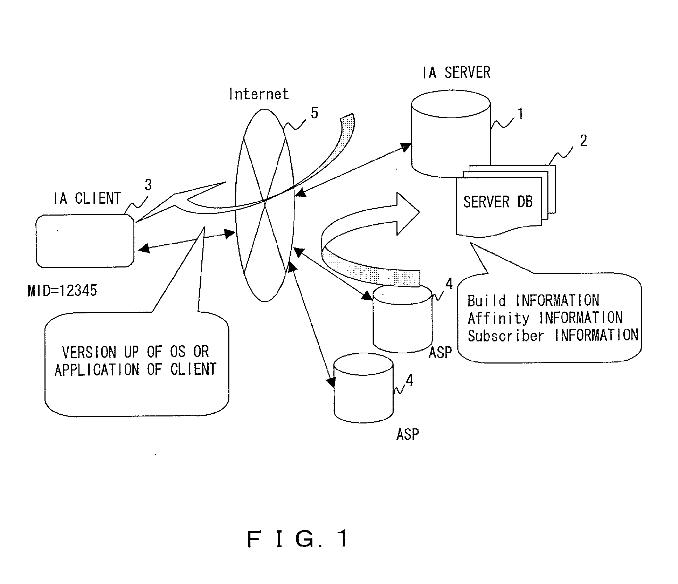

In Fig. 1, an IA client 3 that performs an information communication, an ASP (Application Service Provider: application service server) 4 that provides a service for the IA client 3, and an IA server 1 are connected to each other through a network 5 such as Internet.

The IA server 1 comprises a server DB (version information management DB, environment information storing unit) 2, an environment change information acquiring unit, an environment change information analyzing unit, and an environment change information reflecting unit.

The server DB 2 has a build table that stores environment information of an operating system (OS) or an application program executed by the IA client 3.

The build table has a multi user build area and a single user build area. The multi user build area stores a service in common with a plurality of users who use the IA client 3. The single user build area stores a service for each user who uses the IA client 3.

In addition, the server DB 2 has a machine table that correlatively stores a machine identifier (MID: Machine IDentifier) for uniquely identifying the IA client 3 as hardware, a subscriber identifier (SID: Subscriber IDentifier) for uniquely identifying a user who uses the IA client 3, and an environment flag that represents whether the environment information has been changed.

The environment change information acquiring unit acquires environment change information including a changed portion of the environment information from the ASP. The environment change information is for example version up (upgrade) information of the environment information.

The environment change information analyzing unit analyzes the environment change information acquired by the environment change information acquiring unit corresponding to environment information stored in the server DB.

The environment change information reflecting unit transmits the environment change information analyzed by the environment information change information analyzing unit to the IA client 3 so as to reflect the environment change information to the IA client 3.

The IA client 3 comprises an environment change information receiving unit and a build memory.

The environment change information receiving unit receives the environment change information from the IA server 1.

The build memory has a multi user build memory portion and a single user build memory portion. The multi user build memory portion stores a service in common with a plurality of users who use the IA client 3. The single user build memory portion stores a service for each user who uses the IA client 3.

The IA server 1 reflects the environment change information received by the environment change information receiving unit to the build table.

With such a structure, the IA server 1 can build-manage each user (subscriber) corresponding to MID information of the IA client 3 using the server DB 2 so that each ASP 4 can provide a unique service for each user. Thus, the IA server 1 can provide a service that depends on each affinity or each ASP for each user.

In addition, each ASP 4 defines a user to which it will provide a unique service using SID and registers the defined user in a script format to the IA server 1, so that the ASP 4 can easily provide the service for the user.

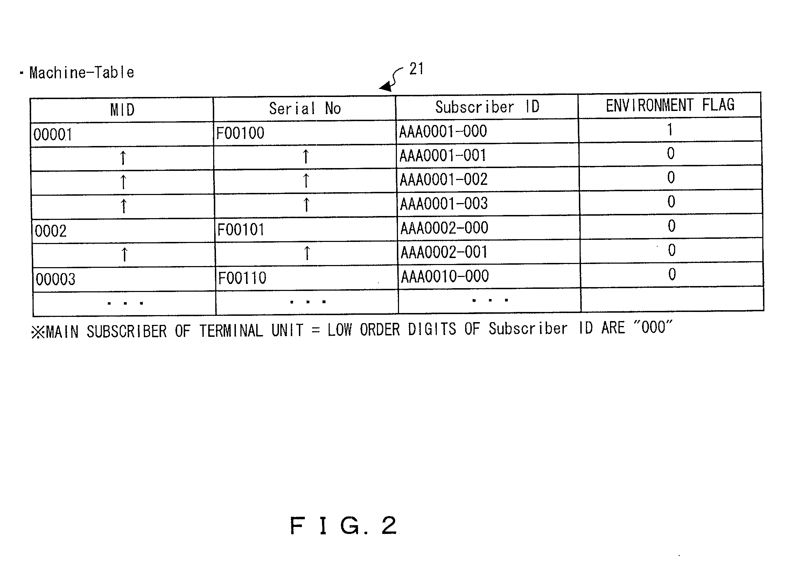

Fig. 2 is a schematic diagram showing a data structure of a machine table.

In Fig. 2, a machine table 21 has fields of "MID", "serial no", "subscriber ID", and "environment flag". In addition, the machine table 21 has general personal fields of "address", "age", "sex", and so forth (not shown).

The field "MID" is a machine identifier for uniquely identifying the IA client 3 as hardware. The field "serial no" is a sequence number assigned to the IA client 3 by the provider (producer or distributor). The "subscriber ID" is a subscriber identifier for uniquely identifying a user who uses the IA client 3. The field "environment flag" is a flag that represents whether or not environment information (OS, application program, or the like executed by the IA client 3) has been changed.

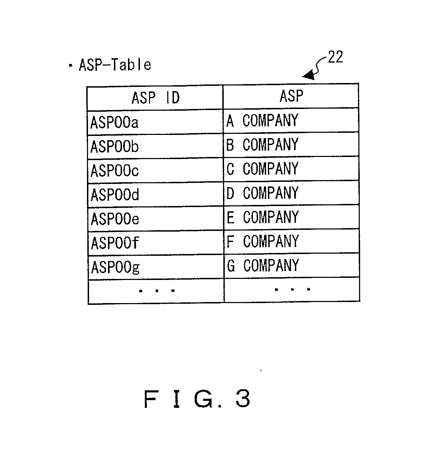

Fig. 3 is a schematic diagram showing a data structure of an ASP table.

In Fig. 3, an ASP table 22 has fields of "ASP ID" and "ASP".

The field "ASP ID" is an application service provider identifier for uniquely identifying an application service provider. The field "ASP" is the company name of the application service provider.

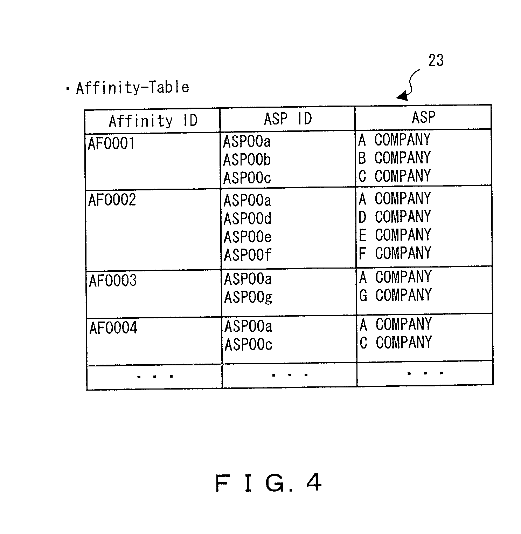

Fig. 4 is a schematic diagram showing a data structure of an affinity table.

In Fig. 4, the affinity table 23 has fields of "affinity ID", "ASP ID", and "ASP".

The field "Affinity ID" is an affinity identifier uniquely assigned to a group of application service providers categorized corresponding to a particular condition (for example, application service providers provide services with same intension (purpose), but different aspects). The field "ASP ID" is an application service provider identifier for uniquely identifying an application service provider as with the field "ASP ID" of the ASP table 22. The field "ASP" is the company name of the application service provider as with the field "ASP" of the ASP table 22.

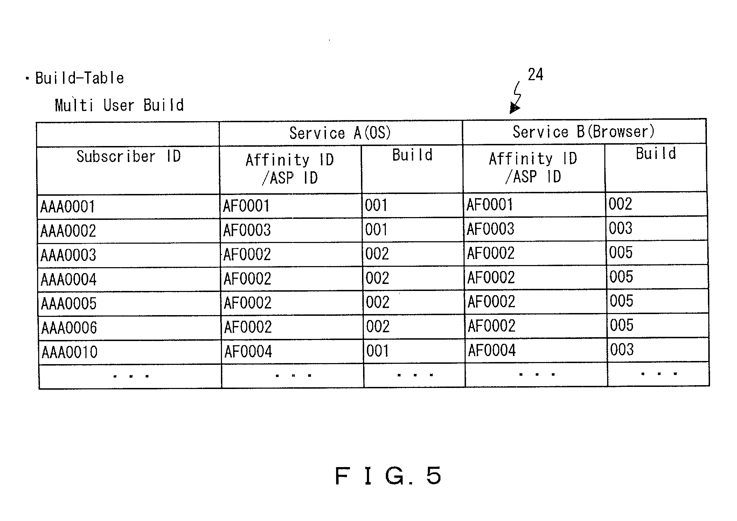

Fig. 5 is a schematic diagram showing a data structure of a multi user build area for storing a service in common with a plurality of users who uses the IA client 3.

In Fig. 5, the multi user build area 24 has fields of "subscriber ID", "affinity ID/ASP ID", and "build".

The field "subscriber ID" is a subscriber identifier for uniquely identifying a user who uses the IA client 3 as with the field "subscriber ID" of the machine table 21. The field "Affinity ID/ASP ID" is an affinity identifier uniquely assigned to a group of application service providers categorized in a particular condition or an application service provider identifier for uniquely identifying an application service provider. The field "build" is code (number) that designates environment information of an operating system, an application program, or the like executed by the IA client 3.

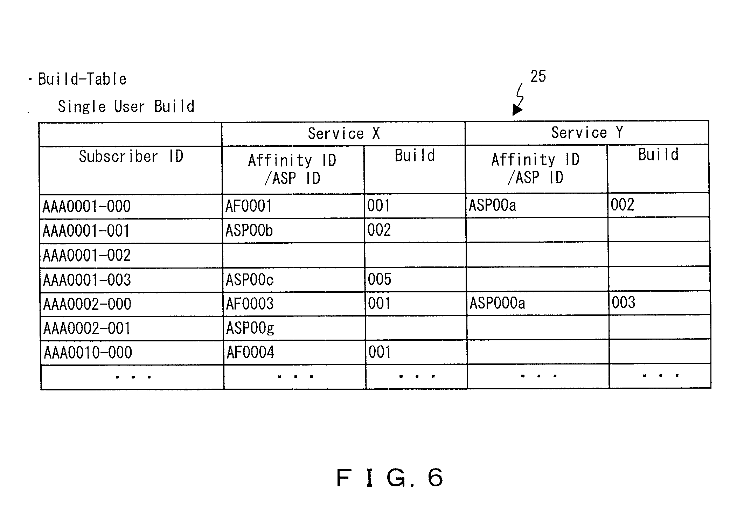

Fig. 6 is a schematic diagram showing a data structure of a single user build area for storing a service for each user who uses the IA client.

In Fig. 6, the single user build area 25 has fields of "subscriber ID", "affinity ID/ASP ID", and "build" as with the multi user build area 24 shown in Fig. 5.

The difference between the multi user build area 24 and the single user build area 25 is in that the field "subscriber ID" of the multi user build area 24 stores a high order portion of a subscriber identifier in common with a plurality of users who use the IA client 3, whereas the field "subscriber ID" of the single user build area 25 stores the entire subscriber identifier of each user.

To effectively change environment information (for example, version up of an OS or an application program), the build table of the server DB 2 shown in Figs. 5 and 6 is managed with a multiple user build and a single user build.

In other words, the version up of for example the OS (that is a portion in common with users) of the IA client 3 is performed with the affinity ID for build data or the ASP ID and the MID and the subscriber ID (high order portion) of the IA client 3. Each user of the IA client 3 is identified with the affinity ID for build data or the ASP ID and the MID and the subscriber ID (high order portion and low order portion = whole) of the IA client 3 and the version up thereof is performed therewith.

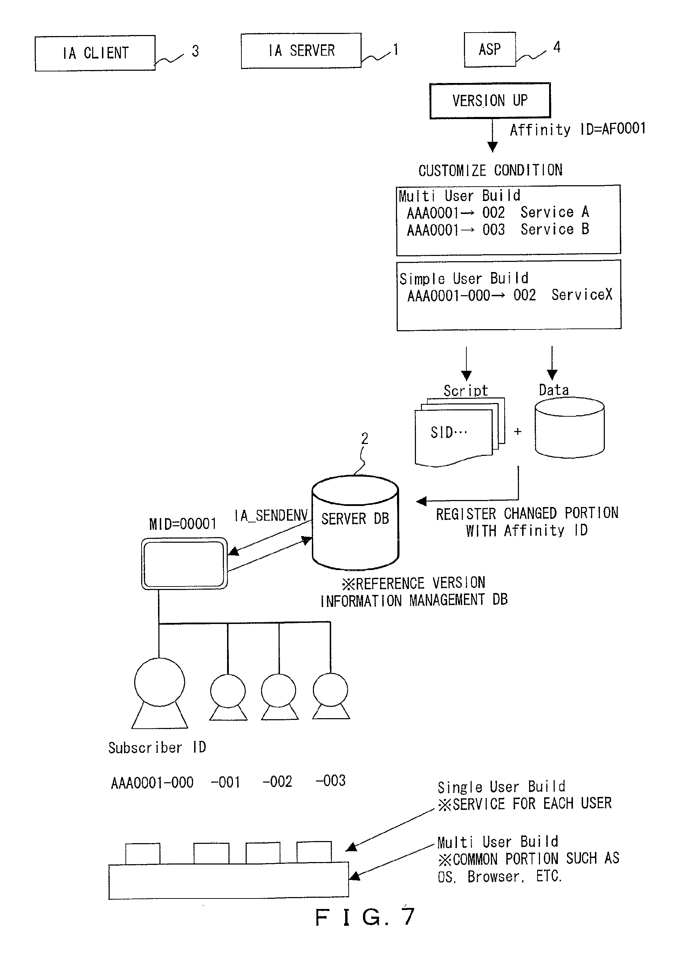

Fig. 7 is a flow chart showing an overall version up process according to the present invention.

When affinity ID = AF0001, the ASP 4 generates a customize condition for registering a changed portion (version up) of environment information to the server DB 2 of the IA server 1. In this example, as a customize condition, in the multi user build area, service A of environment information of a user with subscriber identifier = AAA001 is changed (customized) from 001 to 002. Likewise, in the multi user build area, service B of environment information of the user with subscriber identifier = AAA0001 is changed to 003. In addition, in the single user build area, service X of environment information of a user with subscriber identifier = AAA0001-000 is changed to 002.

The customized contents are generated in a script format besides environment information that is actually changed.

The generated customize condition is registered to the server DB 2 with an affinity identifier.

Thereafter, to acquire the above-described customize condition, the IA client 3 transmits a command IA_SENDENV to the LA server. The command IA_SENDENV is a command for acquiring a version up of the affinity (affinity ID) and the user (SID) and a backup of the user (SID).

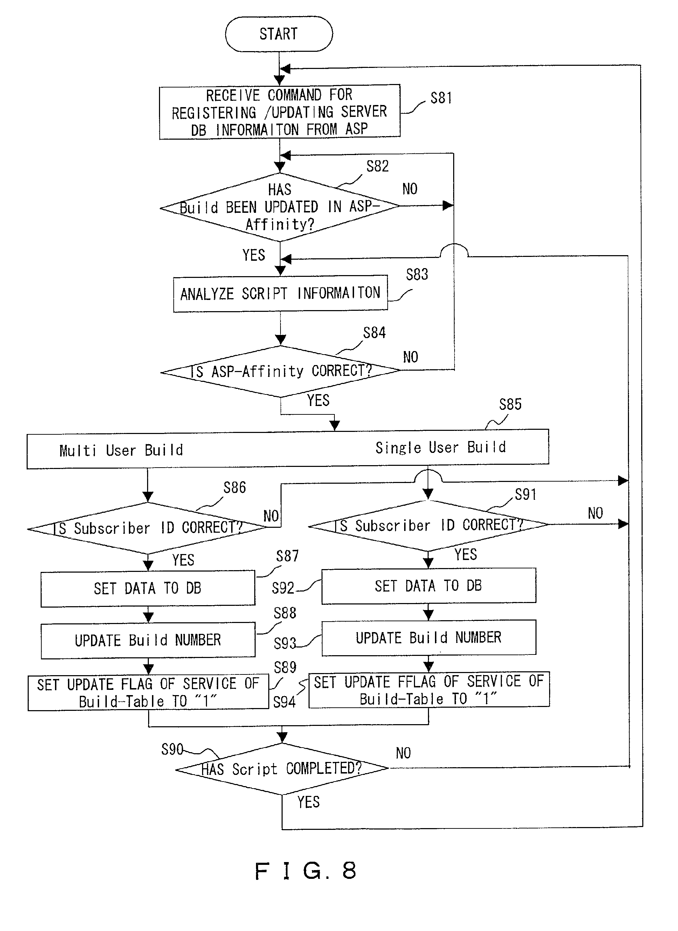

Fig. 8 is a flow chart showing a DB registering/updating process of the IA server.

At step S81, when the IA server 1 receives a command for registering/updating information for the server DB 2 from the ASP 4, the flow advances to step S82. At step S82, the IA server 1 determines whether or not build information has been updated (or registers) in the ASP 4 or its affinity.

When the determined result at step S82 represents that build information has been updated (namely, the determined result at step S82 is Yes), the flow advances to step S83. At step S83, the IA server 1 analyzes transmitted script information. At step S84, the IA server 1 determines whether or not the ASP or the affinity is correct.

When the determined at step S84 represents that the ASP or the affinity is correct (namely, the determined result at step S84 is Yes), the flow advances to step S85. At step S85, the IA server 1 divides the analyzed script information into a multi user build area and a single user build area (when the analyzed script information contains only one of them, steps S86 to S89 or steps S91 to S94 are skipped).

With respect to information of the multi user build area, at step S86, the IA server 1 determines whether or not a subscriber identifier is correct.

When the determined result at step S86 represents that the subscriber identifier is correct (namely, the determined result at step S86 is Yes), the flow advances to step S87. At step S87, the IA server 1 stores (sets) the data to the multi user build area of the server DB 2. At step S88, the IA server 1 updates the build number. At step 389, the IA server 1 sets the update flag of the service of the build table to "1".

At step S90, the IA server 1 determines whether or not the script analyzed at step S83 has been completed. When the determined result at step S90 represents that the script has not been completed (namely, the determined result at step S90 is No), the flow returns to step S83. When the determined result at step S90 represents that the script has been completed (namely, the determined result at step S90 is Yes), the flow returns to step S81. At step S81, the IA server 1 waits for the next command.

On the other hand, with respect to information of the single user build area, at step S91, the IA server 1 determines whether or not a subscriber identifier is correct. When the determined result at step S91 represents that the subscriber identifier is correct (namely, the determined result at step S91 is Yes), the flow advances to step S92. At step S92, the IA server 1 stores (sets) the data to the single user build area of the server DB 2. At step S93, the IA server 1 updates the build number. At step S94, the IA server 1 sets the update flag of the service of the build table to "1". At step S90, the IA server 1 determines whether or not the script has been completed.

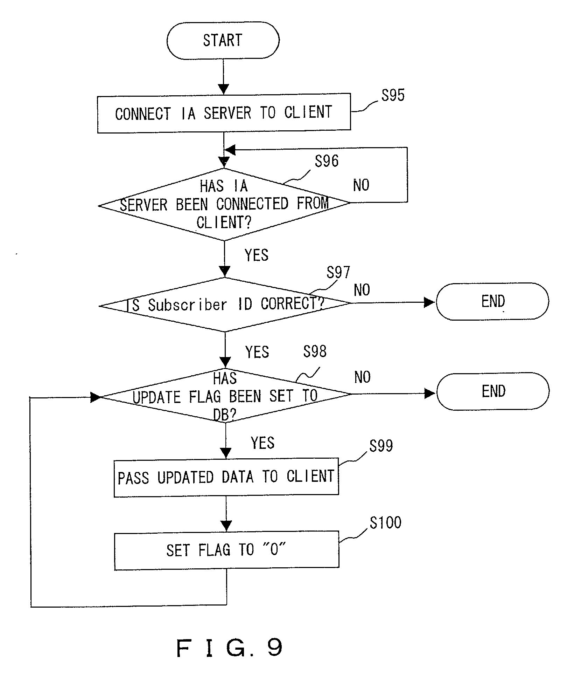

Fig. 9 is a flow chart showing a client connecting process of the IA server.

When the IA server 1 starts the connecting process for the IA client 3 at step S95, the flow advances to step S96. At step S96, the IA server 1 determines whether or not the IA server 1 has been connected from the IA client 3.

When the determined result at step S96 represents that the IA server 1 has been connected from the IA client 3 (namely, the determined result at step S96 is Yes), the flow advances to step S97. At step S97, the IA server 1 determines whether or not the subscriber identifier is correct.

When the determined result at step S97 represents that the subscriber identifier is correct (namely, the determined result at step S97 is Yes), the flow advances to step S98. At step S98, the IA server 1 determines whether or not the update flag has been set to the server DB 2.

When the determined result at step S98 represents that the update flag has been set to the server DB 2 (namely, the determined result at step S98 is Yes), the flow advances to step S99. At step S99, the IA server 1 transmits (passes) updated data (changed portion of environment information) to the IA client 3.

At step S100, the IA server 1 sets the update flag to "0".

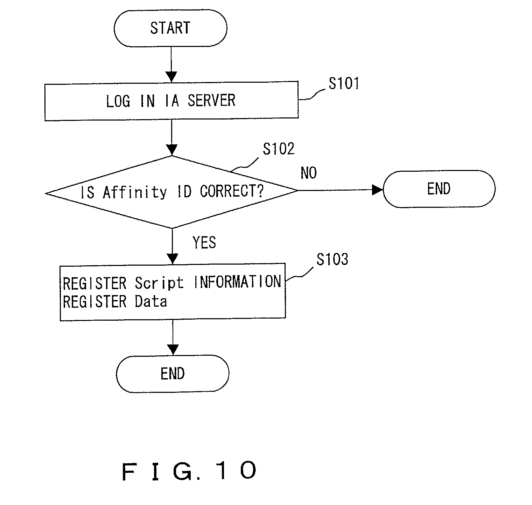

Fig. 10 is a flow chart showing a DB updating process of an ASP.

At step S101, an ASP 4 logs in the IA server 1.

At step S102, the ASP 4 determines whether or not the affinity identifier is correct.

When the determined result at step S102 represents that the affinity identifier is correct (namely, the determined result at step S102 is Yes), the flow advances to step S103. At step S103, the ASP 4 stores (registers) script information and data (changed portion of environment information) transmitted from the IA server 1 to the server DB 2.

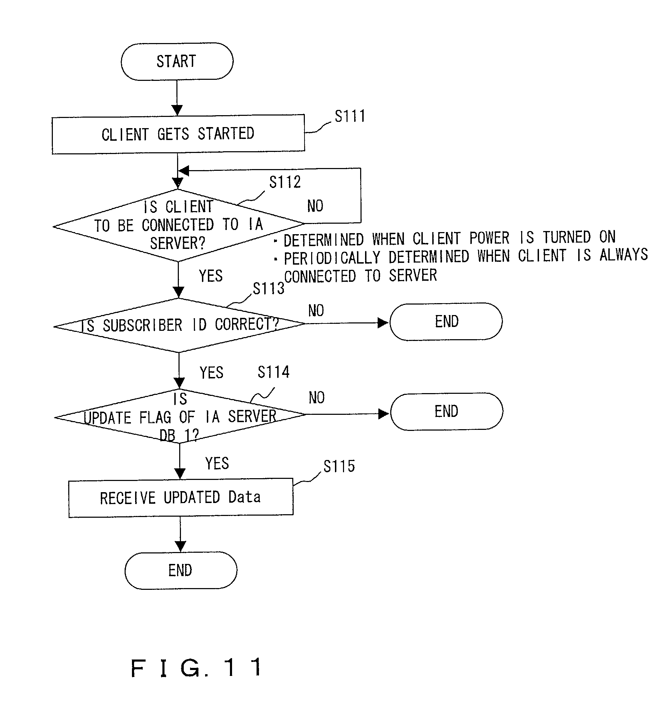

Fig. 11 is a flow chart showing a version up process of an IA client.

At step S111, the IA client 3 gets started. At step S112, the IA client 3 determines whether or not to connect the IA server 1. This determination may be performed when the power of the IA client 3 is turned on. Alternatively, when the IA client 3 is always connected to the network 5, the determination may be periodically performed.

When the determined result at step S112 represents that the IA client 3 is to be connected to the IA server 1 (namely, the determined result at step S112 is Yes), the flow advances to step S113. At step S113, the IA client 3 determines whether or not the subscriber identifier is correct.

When the determined result at step S113 represents that the subscriber identifier is correct (namely, the determined result at step S113 is Yes), the flow advances to step S114. At step S114, the IA client 3 determines whether the update flag that has been set to the server DB 2 of the IA server 1 is 1 or not (0).

When the determined result at step S114 represents that the update flag is 1 (namely, the determined result at step S114 is Yes), the flow advances to step S115. At step S115, the IA client 3 receives updated data (changed portion of environment information).

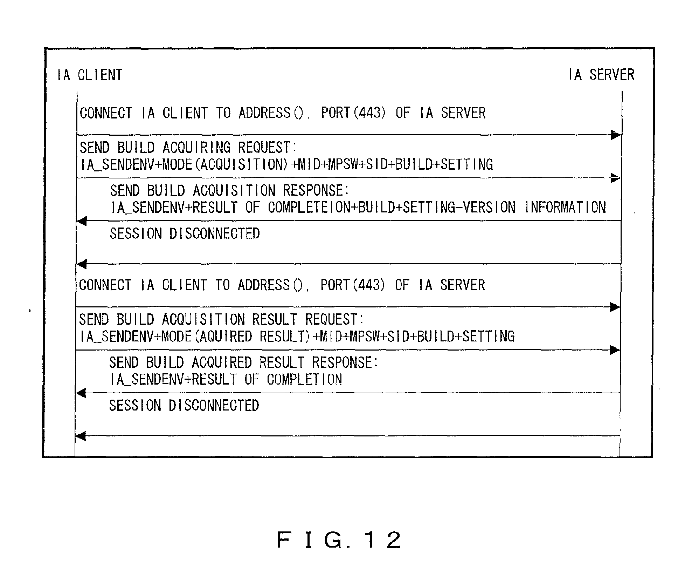

Fig. 12 is a schematic diagram showing a version up sequence of IA_SENDENV.

The IA_SENDENV (command) is a command for acquiring a version up of the affinity (Affinity ID) and the user (SID) and a backup of the user (SID).

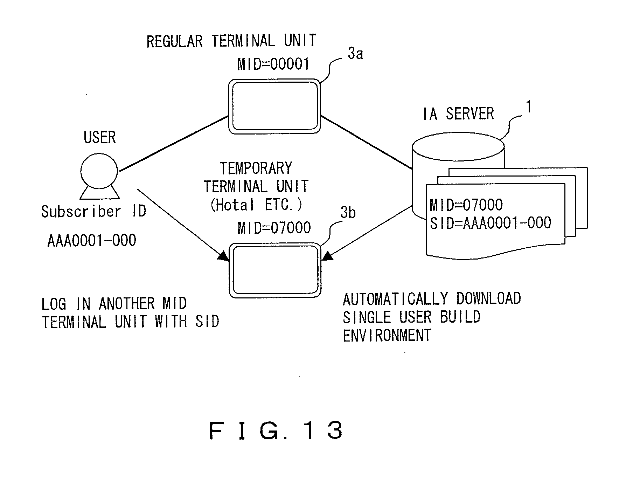

Fig. 13 is a schematic diagram showing an example of the case that an environment of other than a contacted IA client (an IA client with a different MID) is used.

When a user uses an environment of other than a contracted IA client (regular terminal unit) 3a (namely, an IA client (primary terminal unit) 3b with a different MID), the IA client side recognizes information (subscriber ID) as a user's identifier that is read from an IC card or that is directly input. An MID that has not been contracted with the IA server 1 and a subscriber ID as a user's identifier are sent to the IA server 1. As a result, the version up of the IA client 3b is performed. Consequently, the other IA client 3b can receive the same service from the IA server as the IA client 3.

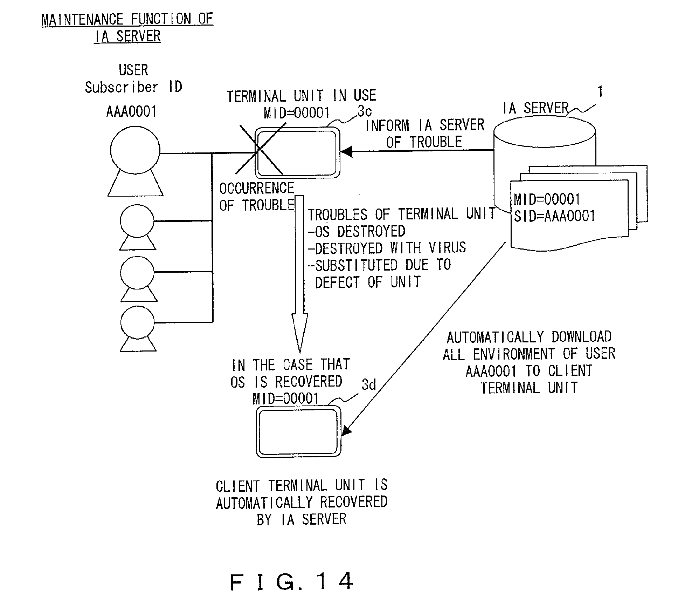

Fig. 14 is a schematic diagram showing an example of the case that any trouble takes place in an IA client.

Since the IA server 1 has a build version and build data for each client terminal unit and for each subscriber, if a client terminal unit has any trouble (for example, a part of the OS is destroyed, the system is infected by virus, or a whole defective client terminal unit is replaced with a new one), required data can be downloaded from the IA server and the new terminal unit can be restored to the latest environment (original state).

An embodiment of the present invention has been described with reference to the accompanying drawings. However, it is clear that as long as the function of the IA server (Network server unit) or the IA client (Internet appliance terminal unit) according to the present invention is accomplished, it may be a single unit, a system composed of a plurality of units, an integrated unit, or a system that performs a process through a network such as LAN or WAN.

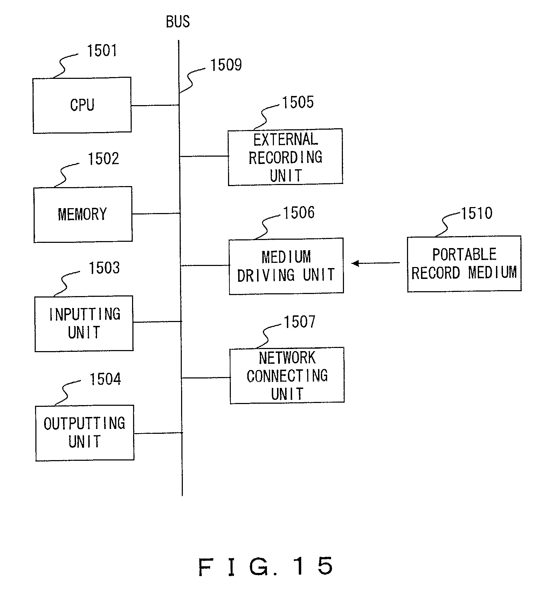

In addition, as shown in Fig. 15, the present invention can be accomplished by a system that comprises a CPU 1501, a memory 1502 such as a ROM and a RAM, an inputting unit 1503, an outputting unit 1504, an external recording unit 1505, a medium driving unit 1506, a portable record medium 1510, and a network connecting unit 1507 that are connected through a bus 1509. In other words, the memory 1502 such as a ROM and a RAM, the external recording unit 1505, or the portable record medium 1510 that records program code of software that accomplishes the system of the above-described embodiment is supplied to the IA server or the IA client. A computer of the IA server or the IA client reads the program code and executes it so as to accomplish the system.

In this case, the program code itself that is read from the portable record medium 1510 or the like accomplishes the new function that the present invention provides. Thus, the portable record medium 1510 or the like on which the program code has been recorded composes the present invention.

Examples of the portable record medium 1510 that is used to supply the program code are a flexible disk, a hard disk, an optical disc, a magneto-optical disc, a CD-ROM, a CD-R, a DVD-ROM, a DVD-RAM, a magnetic tape, a non-volatile memory card, a ROM card, and a variety of record media on which the program code have been recorded through the network connecting unit 1507 (namely, a communication line) used for electronic mail, a personal computer communication, or the like.

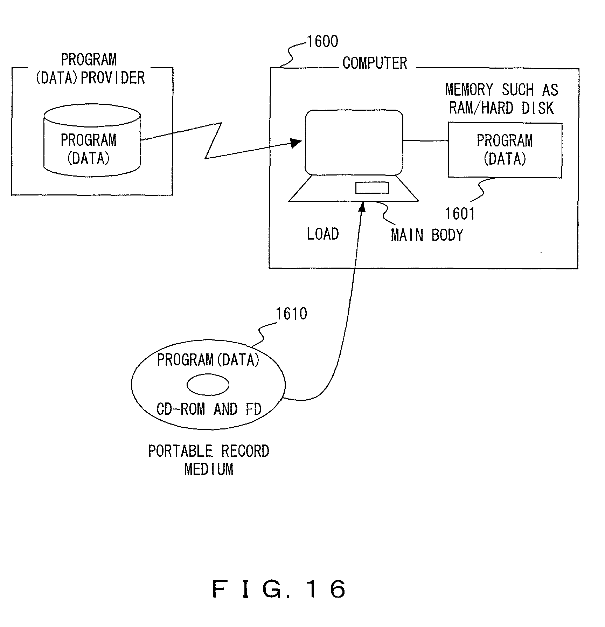

In addition, as shown in Fig. 16, when a computer 1600 executes program code that is read to a memory 1601, the function of the above-described embodiment can be accomplished. Alternatively, corresponding to a command of the program code, the OS or the like that operates on the computer 1600 performs a part or all of the real process. With the process, the function of the above-described embodiment can be accomplished.

In addition, program code that is read from a portable record medium 1610 and a program (data) that is provided by a program (data) provider is written to a memory 1601 of a function extension board inserted into the computer 1600 or of a function extension unit connected to the computer 1600. Thereafter, corresponding to a command of the program code, a CPU or the like of the function extension board or the function extension unit performs a part or all the real process. With the process, the function of the above-described embodiment can be accomplished.

The present invention is not limited to the above-described embodiment. Without departing from the scope of the present invention, various structures or forms are available.

As was described above, according to the present invention, as for a server that an affinity or an ASP provides, using an IA server (version information management DB), not only a service to an IA client, but a service to individual users who use the IA client can be flexibly provided.

In addition, according to the present invention, since a service provider such as an ASP provides a service for each user, not for each IA client, a service that satisfies more needs of users can be provided at low cost.

In addition, according to the present invention, since a service is not provided for each IA client on the user side, privacy of users who use the same IA client can be secured. For example, when a parent and his or her child use one IA client, even if the parent receives a service of an adult content from a service provider such as an ASP or the like, the child cannot receive the same service (even if they use the same IA client, they receive different service contents).

In addition, according to the present invention, a user can receive the same service from a service provider such as an ASP or the like using a temporary terminal unit rather than a regular terminal unit. Thus, the user can use a more valuable service than before.

Although the present invention has been shown and described with respect to a best mode embodiment thereof, it should be understood by those skilled in the art that the foregoing and various other changes, omissions, and additions in the form and detail thereof may be made therein without departing from the scope of the present invention.

## Claims

1. A network server apparatus (1) connected to an Internet appliance terminal unit (3) and an application service server (4) through a network (5), comprising:
environment information storing means for storing environment information of an operating system or an application program executed by the Internet appliance terminal unit (3);
environment change information acquiring means for acquiring environment change information containing a changed portion of the environment information from the application service server (4); and
environment change information analyzing means for analyzing the environment change information acquired by the environment change information acquiring means corresponding to environment information stored in the environment information storing means.

2. The Network server apparatus (1) as set forth in claim 1, further comprising:
environment change information reflecting means for transmitting the environment change information to the Internet appliance terminal unit (3) so as to reflect environment change information analyzed by the environment change information analyzing means to the Internet appliance terminal unit (3).

3. The Network server apparatus (1) as set forth in claim 1 or 2,
wherein the environment information storing means has a build table that has a multi user build area (24) and a single user build area (25), the multi user build area (24) storing a service in common with a plurality of users who use the Internet appliance terminal unit (3), the single user build area (25) storing a service for each user who uses the Internet appliance terminal unit (3).

4. The Network server apparatus (1) as set forth in any of the preceding claims,
wherein the environment change information is version-up information of the environment information.

5. An Internet appliance terminal unit environment information managing method executed by a network server apparatus (1) connected to an Internet appliance terminal unit (3) and an application service server (4) through a network (5), comprising:
storing environment information of an operating system or an application program executed by the Internet appliance terminal unit (3) to environment information storing means of the Network server apparatus (1) ;
acquiring environment change information containing a changed portion of the environment information from the application service server (4); and
analyzing the acquired environment change information.

6. The Internet appliance terminal unit environment information managing method as set forth in claim 5, further comprising:
transmitting the environment change information to the Internet appliance terminal unit (3) so as to reflect the analyzed environment change information to the Internet appliance terminal unit (3).

7. An Internet appliance terminal unit environment information managing program that causes a computer of a network server apparatus (1) connected to an Internet appliance terminal unit (3) and an application service server (4) through a network (5) to accomplish the functions of:
storing environment information of an operating system or an application program executed by the Internet appliance terminal unit (3) to environment information storing means of the Network server apparatus (1);
acquiring environment change information containing a changed portion of the environment information from the application service server (4); and
analyzing the acquired environment change information.

8. The Internet appliance terminal unit environment information managing program as set forth in claim 7, further comprising the function of:
transmitting the environment change information to the Internet appliance terminal unit (3) so as to reflect the analyzed environment change information to the Internet appliance terminal unit (3).

9. An Internet appliance terminal unit (3) connected to a network server apparatus (1) as set forth in any of claims 1 to 6 and an application service server (4) through a network (5), comprising:
environment change information receiving means for receiving the environment change information from the Network server apparatus (1); and
a build memory having a multi user build memory portion (24) and a single user build memory portion (25), the multi user build memory portion (24) storing a service in common with a plurality of users who use the Internet appliance terminal unit (3), the single user build memory portion (25) storing a service for each user who uses the Internet appliance terminal unit (3),
wherein the environment change information received by the environment change information receiving means is reflected to the build memory.

10. A computer readable record medium on which is recorded an Internet appliance terminal unit environment information managing program that is executed by a network server apparatus (1) connected to an Internet appliance terminal unit (3) and an application service server (4) through a network (5), the Internet appliance terminal unit environment information managing program accomplishing the functions of:
storing environment information of an operating system or an application program executed by the Internet appliance terminal unit (3) to environment information storing means of the Network server apparatus (1) ;
acquiring environment change information containing a changed portion of the environment information from the application service server (4); and
analyzing the acquired environment change information.

11. The computer readable record medium as set forth in claim 10, further comprising the function of:
transmitting the environment change information to the Internet appliance terminal unit (3) so as to reflect the analyzed environment change information to the Internet appliance terminal unit (3).
